# EUROPÄISCHE PATENTSCHRIFT

(11) **EP 0 807 652 B1**
(45) Veröffentlichungstag und Bekanntmachung des Hinweises auf die Patenterteilung: **14.11.2001**
(21) Anmeldenummer: 97810284.6
(22) Anmeldetag: 06.05.1997
(51) Int. Cl.: C08G 61/06, C08L 65/00, C08K 3/04, C08K 3/40

(54) **Verfahren zur Herstellung von faserverstärkten Verbundstoffen**
Process for producing fibre-reinforced compositions
Procédé de fabrication de matériaux composites à renfort fibreux

(30) Priorität: 14.05.1996 CH 122796
(43) Veröffentlichungstag der Anmeldung: 19.11.1997
(73) Patentinhaber: Ciba Specialty Chemicals Holding Inc., 4057 Basel (CH)
(72) Erfinder: Setiabudi, Frans, 79427 Eschbach (DE); Kainmüller, Thomas, 79576 Weil am Rhein (DE)

(56) Entgegenhaltungen:
- EP-A- 0 534 482
- WO-A-96/16100
- WO-A-96/20235

## Beschreibung

Die vorliegende Erfindung betrifft ein Verfahren zur Herstellung von faserverstärkten Verbundstoffen, die nach diesem Verfahren hergestellten Verbundstoffe sowie die Verwendung dieser Verbundstoffe im Automobil-, Flugzeug- oder Sportgerätebau.

Cycloolefine, die mittels ringöffnender Metathese-Polymerisation (ROMP) polymerisiert werden können, sollten aufgrund ihres Eigenschaftsprofils als Imprägnierharze zur Herstellung von faserverstärkten Verbundstoffen geeignet sein. In der EP-A-424 833 wird ein Verfahren zum Beschichten oder Imprägnieren von Substraten mit Polycycloolefinen mittels des RIM-Prozesses (reaction injection molding) beschrieben. Dabei wird ein Zwei-Komponenten-System aus einem Katalysator und einem Co-Katalysator für die ringöffnende Metathese-Polymerisation verwendet. Das Gewebe wird zunächst mit dem ROMP-Katalysator beschichtet und in eine Form gebracht. Anschliessend wird das Cycloolefin mit dem Cokatalysator gemischt und diese Mischung in die erwärmte Form eingelassen. In einer exothermen Reaktion polymerisiert das Cycloolefin daraufhin in sehr kurzer Zeit.

Dieses Verfahren ist jedoch wegen der separaten Beschichtung des Gewebes mit dem Katalysator relativ aufwendig. Die Verwendung von Alkylaluminiumchloriden als Cokatalysator erfordert ausserdem den Ausschluss von Feuchtigkeit.

Es wurde nun gefunden, dass ein Gemisch aus einem Cycloolefin und spezifischen Ruthenium-Katalysatoren zur Imprägnierung von Fasern im RIM-Prozess geeignet ist.

Gegenstand der vorliegenden Erfindung ist ein Verfahren zur Herstellung von faserverstärkten Verbundstoffen, dadurch gekennzeichnet, dass ein Gewebe in das Unterteil einer offenen zweiteiligen Form gebracht wird, die Form geschlossen wird und ein Reaktionsharzgemisch enthaltend
(a) ein gespanntes Cycloolefin und
(b) eine Verbindung der Formel I oder II

   (R₁R₂R₃P)ₓL_{y}Ru²⁺Z₁⁻Z₂⁻ (I),

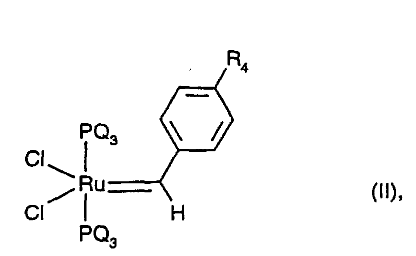

   worin
   R₁, R₂ und R₃ unabhängig voneinander Phenyl, Tolyl oder Cyclohexyl bedeuten,
   L für unsubstituiertes oder mit 1 bis 3 C₁-C₄-Alkyl substituiertes Benzol, Thiophen, Benzonitril, Acetonitril, Stickstoff (N₂), einen unsubstituierten oder teilweise oder vollständig fluorierten C₁-C₄-Alkohol, CO, H₂O oder NH₃ steht,
   Z₁⁻ und Z₂⁻ unabhängig voneinander für H⁻, Cl⁻, Br⁻, BF₄⁻, PF₆⁻, SbF₆⁻, AsF₆⁻, CF₃SO₃⁻, C₆H₅-SO₃⁻, p-Toluolsulfonat (Tosylat), 3,5-Dimethylphenylsulfonat, 2,4,6-Trimethylphenylsulfonat, 4-Trifluormethylphenylsulfonat oder Cyclopentadienyl stehen,
   x eine Zahl von 1 bis 3 und y eine Zahl von 0 bis 3 darstellen, wobei gilt 2 ≤ x+y ≤ 4,
   Q für Phenyl, Cyclopentyl oder Cyclohexyl steht und R₄ Wasserstoff, Chlor oder tert.-Butyl bedeutet,
unter Druck in die Form eingespritzt und gehärtet wird.

Das Einspritzen eines Reaktionsharzes in eine Form ist dem Fachmann unter den Begriffen RIM (reaction injection molding) bzw. S-RIM (structural reaction injection molding) oder auch als RTM (resin transfer molding) bekannt. Das Harz kann dabei mit Überdruck (zweckmässig bis ca. 10 bar) in die unter Normaldruck stehende Form gepumpt werden. Es ist aber auch möglich, die Form zu evakuieren und dann über ein Ventil die Verbindung zu dem unter Normaldruck oder Überdruck stehenden Harzreservoir herzustellen. Die Form kann sowohl bei Raumtemperatur als auch bei höheren Temperaturen (bis zur Härtungstemperatur) befüllt werden. Es ist jedoch zweckmässig, vor allem bei der industriellen Anwendung, dass die Imprägnierung des Gewebes und die nachfolgende Aushärtung bei derselben Temperatur erfolgen; d.h. vorzugsweise wird die Form bereits vor der Imprägnierung auf die Härtungstemperatur erwärmt.
Nach der vollständigen Imprägnierung des Gewebes wird die Form erwärmt, vorzugsweise auf 40-300 °C, insbesondere 60-200 °C, bis zur vollständigen Härtung des Harzes.

Mit dem erfindungsgemässen Verfahren können alle gebräuchlichen Fasern imprägniert werden. Vorzugsweise werden Glasfasern, Kohlefasern oder Aramidfasern (z.B. Kevlar® ) verwendet.

Unter gespannten Cycloolefinen sind im Rahmen der vorliegenden Erfindung alle Cycloolefine mit Ausnahme des Cyclohexens und seiner Derivate, die nicht mit der ringöffnenden Metathese polymerisiert werden können, zu verstehen. Beispiele für gespannte Cycloolefine sind u.a. in der WO 96/16100 und der WO 96/20235 beschrieben.

Vorzugsweise wird als Komponente (a) ein Diels-Alder-Addukt von Cyclopentadien eingesetzt, wie z.B. eine Verbindung der Formel III 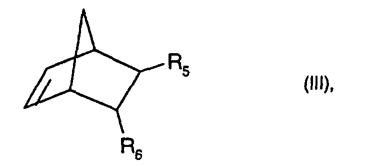 worin R₅ und R₆ unabhängig voneinander Wasserstoff, C₁-C₁₂-Alkyl, Phenyl, Tolyl, Cyclohexyl, Cyclohexenyl, Halogen, Cyano, C₁-C₁₂-Hydroxyalkyl oder C₁-C₁₂-Halogenalkyl bedeuten oder R₅ und R₆ zusammen mit den C-Atomen, an die sie gebunden sind, einen fünf- oder sechsgliedrigen Ring bilden.

Geeignete Diels-Alder-Addukte sind beispielsweise die folgenden Verbindungen:

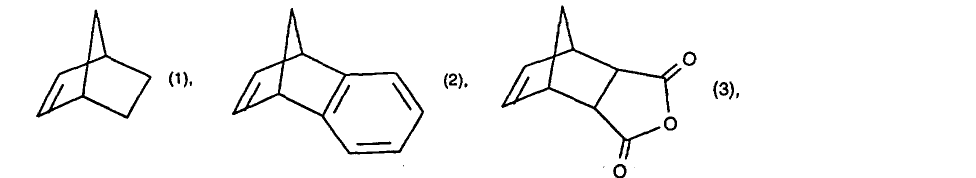

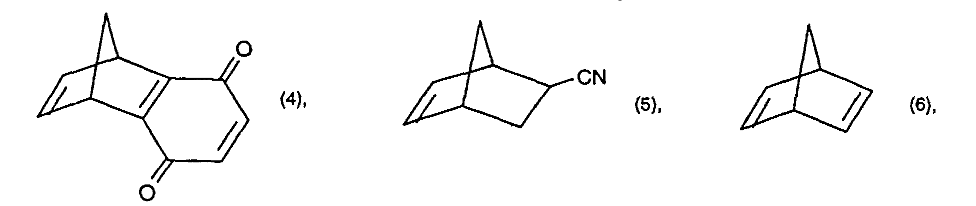

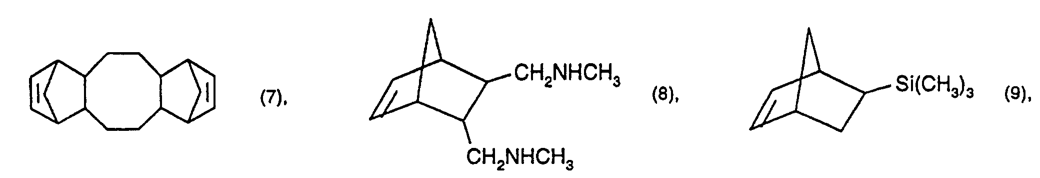

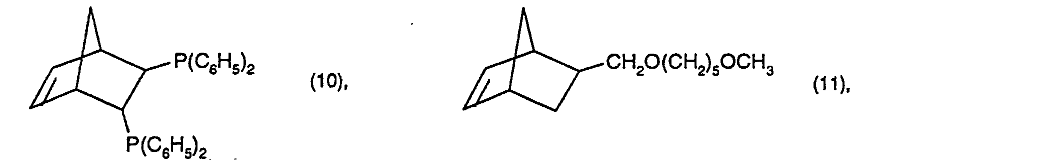

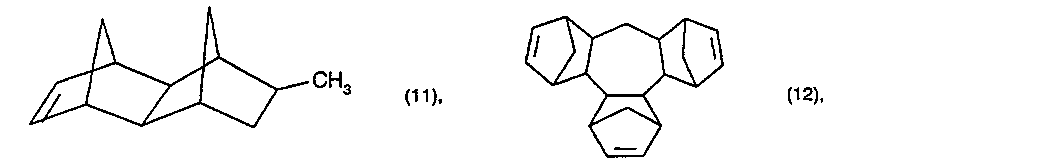

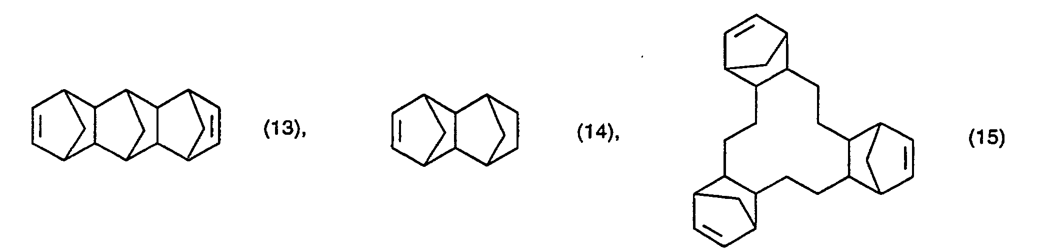

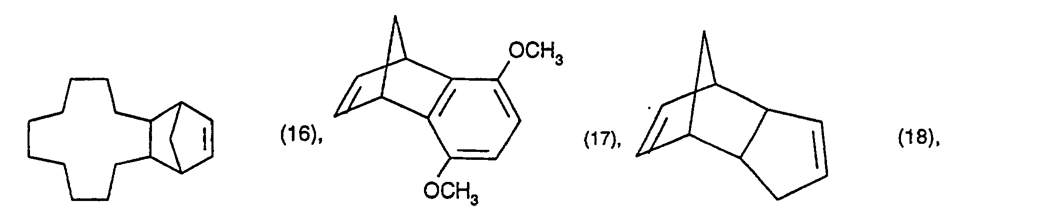

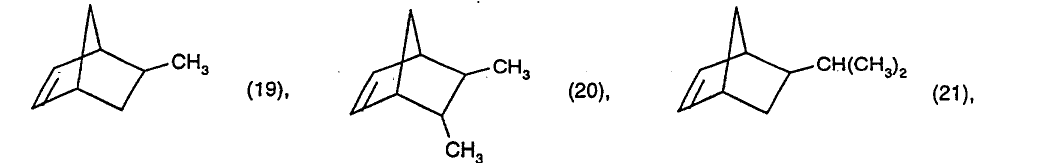

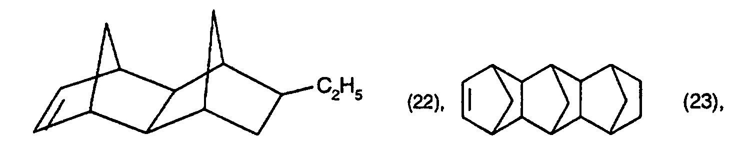

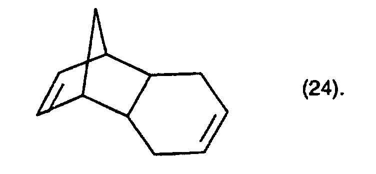

Bevorzugte Diels-Alder-Addukte sind Tetracyclododecen (14), Methyltetracyclododecen (11) und insbesondere Dicyclopentadien (18).

Die als Komponente (b) zu verwendeten ROMP-Katalysatoren sind in WO 96/16100, WO 96/20235 und WO 93/20111 beschrieben.

Besonders bevorzugte ROMP-Katalysatoren sind [(Cyclohexyl)₃P]₂RuCl₂, [(C₆H₅)₃P]₃ RuCl₂, [(C₆H₅)₃P]₃ (CO)RuH₂, [(C₆H₅)₃P]₃ RuCl(Cyclopentadienyl), [(Cyclohexyl)₃P]₂(CH₃OH)Ru(Tosylat)₂, [(o-Tolyl)₃P]₃RuCl₂, [(CH₃)₂CH]₃P(p-Cymol)RuCl₂ und insbesondere (Cyclohexyl)₃P(p-Cymol)RuCl₂; (p-Cymol = 1-Methyl-4-isopropylbenzol).

Die Mengen der Komponenten (a) und (b) können in den erfindungsgemässen Zusammensetzungen in weiten Bereichen variieren.
Vorzugsweise enthalten die erfindungsgemässen Zusammensetzungen, bezogen auf die Gesamtzusammensetzung, 90,0-99,999 Gew.-%, insbesondere 98,0-99,99 Gew.-%, der Komponente (a) und 0,001-10,0 Gew.-%, insbesondere 0,01-2,0 Gew.-%, der Komponente (b).

Die gewünschte Viskosität des härtbaren Gemisches kann durch Zusatz von thermoplastischen Materialien eingestellt werden. Beispiele für geeignete Thermoplasten sind Polystyrol, Polynorbornen (z.B. Norsorex® NS der Fa. Nippon Zeon), hydrierte Polynorbornenderivate (z.B. Zeonex® der Fa. Nippon Zeon), Polycycloocten (z.B. Vestenamer® der Fa. Hüls) und Polybutadien.

Weiterhin können die härtbaren Mischungen Zähigkeitsvermittler ("Toughener") enthalten, wie zum Beispiel Core/Shell-Polymere oder die dem Fachmann als "Rubber Toughener" bekannten Elastomere oder Elastomere enthaltende Pfropfpolymere. Geeignete Zähigkeitsvermittler sind beispielsweise in der EP-A-449 776 beschrieben.

Zur Verbesserung der elektrischen Eigenschaften (Dielektrizitätskonstante, Verlustfaktor) können den härtbaren Mischungen Silane, wie z.B. die von der Fa. Osi Specialties unter der Bezeichnung Silquest® Silan angebotenen Verbindungen, zugesetzt werden. Geeignete Silane sind beispielsweise Octyltriethoxysilan, Methyltriethoxysilan, Vinyltriethoxysilan, Methyltrimethoxysilan, Vinyltrimethoxysilan, γ-Aminopropyltrimethoxysilan und γ-Glycidyloxypropyltrimethoxysilan.

Neben den oben erwähnten Additiven können die erfindungsgemässen Zusammensetzungen weitere übliche Zusatzstoffe enthalten, wie z.B. Antioxidantien, Lichtschutzmittel, Weichmacher, Farbstoffe, Füllstoffe, Pigmente, Thixotropiemittel, Entschäumer, Antistatika, Gleitmittel und Entformungshilfsmittel.

Die als Komponente (b) zu verwendenden ROMP-Katalysatoren sind feuchtigkeitsunempfindlich. Bei dem erfindungsgemässen Verfahren muss daher nicht notwendigerweise unter Feuchtigkeitsausschluss gearbeitet werden. Auch die in der EP-A-424 833 beschriebene separate Beschichtung des Gewebes mit dem Katalysator ist nicht erforderlich.

Mit dem erfindungsgemässen Verfahren wird eine sehr gleichmässige Imprägnierung erzielt.
Durch die Wahl des Katalalysators und dessen Menge lässt sich die gewünschte Latenz der Reaktionsmischung einstellen. Eine hohe Latenz bedeutet eine hohe Stabilität bei der jeweiligen Lagertemperatur, ohne dass die Reaktivität bei der gewünschten Härtungstemperatur wesentlich reduziert wird.

Die nach dem erfindungsgemässen Verfahren hergestellten faserverstärkten Verbundstoffe zeichnen sich vor allem durch eine hohe Wärmestabilität, hohe Zähigkeit und mechanische Festigkeit aus und eignen sich besonders zur Herstellung von Werkzeugen oder Formteilen für den Automobil-, Flugzeug- oder Sportgerätebau.

Die nach dem erfindungsgemässen Verfahren hergestellten faserverstärkten Verbundstoffe sowie deren Verwendung zur Herstellung von Werkzeugen oder Formteilen für den Automobil-, Flugzeug- oder Sportgerätebau bilden daher einen weiteren Erfindungsgegenstand.

### Beispiel:

### Herstellung des Reaktionsharzgemisches:

1,5 g Norsorex® NS (thermoplastisches Polynorbornen der Firma Nippon Zeon) wird bei 80 °C in 97,4 g Dicyclopentadien gelöst. Nach Abkühlen auf 60 °C wird die Mischung 10 min unter Vakuum (3 mbar) entgast. Anschliessend werden 0,5 g Vinyltrimethoxysilan (Silquest® A-171 der Firma Osi Specialties) und 0,3 g Byk 066 (Entschäumer der Firma Byk Chemie) hinzugegeben. Nach Abkühlen auf Raumtemperatur wird 0,3 g (Cyclohexyl)₃P(p-Cymol)RuCl₂ zugefügt. Die Mischung wird auf 60 °C erwärmt und ca. 20 min bei dieser Temperatur gerührt bis zur vollständigen Auflösung des Katalysators. Das Gemisch wird dann noch einmal 10 min unter Vakuum (3 mbar) entgast. Nach Abkühlen auf Raumtemperatur ist die Mischung gebrauchsfertig für den RTM-Prozess.

### RTM-Prozess:

Für den RTM-Prozess wird eine zweiteilige Stahlform mit einem Innenraum der Abmessungen 25 cm^{.} 25 cm^{.} 0,3 cm verwendet. Der untere Teil der Form besitzt seitlich am Boden eine Öffnung mit einem Durchmesser von 3 mm, die durch einen Kanal mit dem Harzbehälter verbunden ist. Zwischen dem Harzbehälter und der Form ist ein Ventil eingebaut. Eine zweite Öffnung mit einem Durchmesser von 3 mm in der Mitte des oberen Teils der Form ist mit einer Vakuumpumpe verbunden.
Mehrere Lagen Glasfasergewebe werden zugeschnitten und in die Form gelegt. Bei Raumtemperatur wird die Form auf 10 mbar evakuiert. Durch Öffnen des Ventils wird das Reaktionsharzgemisch in die Form transferiert. Dabei fliesst das Harz gleichmässig vom Rand zur Mitte der Form. Die Fliessgeschwindigkeit lässt sich durch die Stellung des Ventils oder durch die Höhe des Drucks in der Form regulieren. Um eine gute Imprägnierung des Gewebes zu erhalten, sollte die Füllzeit 1-3 min betragen.

Anschliessend wird die Form auf 95 °C erwärmt. Nach 4-5 h kann das angehärtete Material aus der Form genommen und im Ofen nachgehärtet werden.

## Patentansprüche

1. Verfahren zur Herstellung von faserverstärkten Verbundstoffen, **dadurch gekennzeichnet, dass** ein Gewebe in den Unterteil einer offenen zweiteiligen Form gebracht wird, die Form geschlossen wird und ein Reaktionsharzgemisch enthaltend
(a) ein gespanntes Cycloolefin und
(b) eine Verbindung der Formel I oder II
(R₁R₂R₃P)ₓL_{y}Ru²⁺Z₁⁻Z₂⁻ (I), 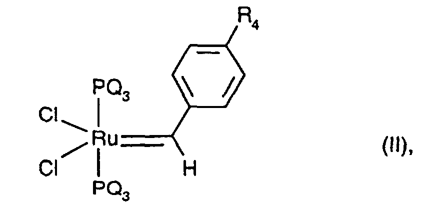
worin
R₁, R₂ und R₃ unabhängig voneinander Phenyl, Tolyl oder Cyclohexyl bedeuten,
L für unsubstituiertes oder mit 1 bis 3 C₁-C₄-Alkyl substituiertes Benzol, Thiophen, Benzonitril, Acetonitril, Stickstoff (N₂), einen unsubstituierten oder teilweise oder vollständig fluorierten C₁-C₄-Alkohol, CO, H₂O oder NH₃ steht,
Z₁⁻ und Z₂⁻ unabhängig voneinander für H⁻, Cl⁻, Br⁻, BF₄⁻, PF₆⁻, SbF₆⁻, AsF₆⁻, CF₃SO₃⁻, C₆H₅-SO₃⁻, p-Toluolsulfonat (Tosylat), 3,5-Dimethylphenylsulfonat, 2,4,6-Trimethylphenylsulfonat, 4-Trifluormethylphenylsulfonat oder Cyclopentadienyl stehen,
x eine Zahl von 1 bis 3 und y eine Zahl von 0 bis 3 darstellen, wobei gilt 2 ≤ x+y ≤ 4,
Q für Phenyl, Cyclopentyl oder Cyclohexyl steht und R4 Wasserstoff, Chlor oder tert.-Butyl bedeutet,
unter Druck in die Form eingespritzt und gehärtet wird.

2. Verfahren nach Anspruch 1, **dadurch gekennzeichnet, dass** das Gewebe Glasfasern, Kohlefasern oder Aramidfasern enthält.

3. Verfahren nach Anspruch 1, **dadurch gekennzeichnet, dass** das Reaktionsharzgemisch als Komponente (a) ein Diels-Alder-Addukt von Cyclopentadien enthält.

4. Verfahren nach Anspruch 1, **dadurch gekennzeichnet, dass** das Reaktionsharzgemisch als Komponente (a) Dicyclopentadien enthält.

5. Verfahren nach Anspruch 1, **dadurch gekennzeichnet, dass** das Reaktionsharzgemisch als Komponente (b) (1-Methyl-4-isopropylbenzol)RuCl₂P(Cyclohexyl)₃.enthält.

6. Faserverstärkter Verbundstoff erhältlich nach dem Verfahren nach Anspruch 1.

7. Verwendung von faserverstärkten Verbundstoffen nach Anspruch 6 zur Herstellung von Werkzeugen oder Formteilen für den Automobil-, Flugzeug- oder Sportgerätebau.

## Claims

1. A process for the production of a fibre-reinforced composite, which comprises introducing a fabric into the lower part of an open two-part mould, closing the mould and injecting into the mould under pressure and curing a reactive resin mixture comprising
(a) a strained cycloolefin and
(b) a compound of the formula I or II
(R₁R₂R₃P)ₓL_{y}Ru²⁺Z₁⁻Z₂⁻ (I), 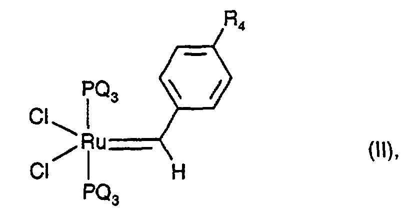
in which
R₁, R₂ and R₃ independently of one another are phenyl, tolyl or cyclohexyl,
L is benzene which is unsubstituted or substituted by 1 to 3 C₁-C₄alkyl, thiophene, benzonitrile, acetonitrile, nitrogen (N₂), an unsubstituted or partly or completely fluorinated C₁-C₄alcohol, CO, H₂O or NH₃,
Z₁⁻ and Z₂⁻ independently of one another are H⁻, Cl⁻, Br⁻, BF₄⁻, PF₆⁻, SbF₆⁻, AsF₆⁻, CF₃SO₃⁻, C₆H₅-SO₃⁻, p-toluenesulfonate (tosylate), 3,5-dimethylphenylsulfonate,
2,4,6-trimethylphenylsulfonate, 4-trifluoromethylphenylsulfonate or cyclopentadienyl,
x is a number from 1 to 3 and y is a number from 0 to 3, where 2 ≤ x+y ≤ 4,
Q is phenyl, cyclopentyl or cyclohexyl and R₄ is hydrogen, chlorine or tert-butyl.

2. A process according to claim 1, wherein the fabric comprises glass fibres, carbon fibres or aramid fibres.

3. A process according to claim 1, wherein the reactive resin mixture comprises a Diels-Alder adduct of cyclopentadiene as component (a).

4. A process according to claim 1, wherein the reactive resin mixture comprises dicyclopentadiene as component (a).

5. A process according to claim 1, wherein the reactive resin mixture comprises (1-methyl-4-isopropylbenzene)RuCl₂P(cyclohexyl)₃ as component (b).

6. A fibre-reinforced composite obtainable by the process according to claim 1.

7. The use of a fibre-reinforced composite according to claim 6 for the production of tools or mouldings for car, aircraft or sports equipment construction.

## Revendications

1. Procédé pour la préparation de matériaux composites renforcés aux fibres, **caractérisé en ce qu'**on inbtroduit un tissu dans la partie inférieure d'un moule ouvert à deux compartiments, on ferme le moule et on injecte un mélange de résine réactive contenant
(a) une cyclooléfine tendue et
(b) un composé de formule I ou II
(R₁R₂R₃P)ₓL_{y}Ru²⁺Z₁⁻Z₂⁻ (I)
où 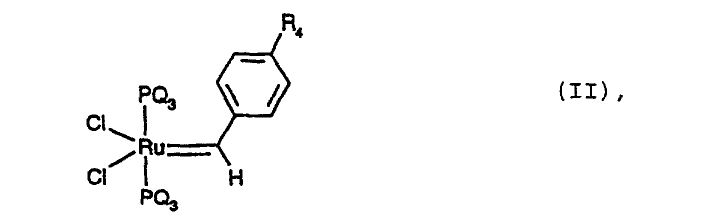
R₁, R₂ et R₃ représentent, indépendammenent les uns des autres, des groupes phényle, tolyle ou cyclohexyle,
L représente des groupes benzène non substitué ou substitué par 1 à 3 groupes alkyle en C₁-C₄, thiophène, benzonitrile, acétonitrile, azote (N₂), un alcool en C₁-C₄ non substitué ou partiellement ou entièrement fluoré, CO, H₂O ou NH₃,
Z₁⁻ et Z₂⁻ représentent, indépendamment l'un de l'autre, H⁻, Cl⁻, Br⁻, BF₄⁻, PF₆⁻, SbF₆⁻, AsF₆⁻, CF₃SO₃⁻, C₆H₅⁻, SO₃⁻, p-toluènesulfonate (tosylate), 3,5-diméthylphénylsulfonate, 2,4,6-triméthylphénylsulfonate, 4-trifluorométhylphénylsulfonate ou cyclopentadiényle,
x vaut 1 à 3 et y va de 0 à 3, où s'applique 2 ≤ x + y ≤ 4,
Q représente un groupe phényle, cyclopentyle ou cyclohexyle et R₄ représente un atome d'hydrogène, un atome de chlore ou un groupe tert.-butyle,
sous pression dans le moule et on durcit.

2. Procédé selon la revendication 1, **caractérisé en ce que** la tissu contient des fibres de verre, des fibres de carbone ou fibres d'aramides.

3. Procédé selon la revendication 1, **caractérisé en ce que** le mélange de résine réactive contient un adduit de Diels-Alder de cyclopentadiène, en tant que composant (a).

4. Procédé selon la revendication 1, **caractérisé en ce que** le mélange de résine réactive contient le dicyclopentadiène, en tant que composant (a).

5. Procédé selon la revendication 1, **caractérisé en ce que** le mélange de résine réactive contient en tant que composant (b) le (1-méthyl-4-isopropylbenzène)RuCl₂P(cyclohexyle)₂.

6. Matériau composite renforcé aux fibres que l'on peut obtenir selon la procédé selon la revendication 1.

7. Utilisation de matériaux composites renforcés aux fibres selon la revendication 6 pour la préparation d'outillage ou de . profilés pour la construction automobile, la construction aéronautique ou de l'équipement sportif.
